# EUROPEAN PATENT SPECIFICATION

(11) **EP 1 611 994 B1**
(45) Date of publication and mention of the grant of the patent: **20.12.2006**
(21) Application number: 05254069.7
(22) Date of filing: 29.06.2005
(51) Int. Cl.: B23Q 1/66, B23Q 7/14

(54) **Machine tool with pallet change function and pallet changing method**
Werkzeugmaschine mit Palettenwechselfunktion sowie Verfahren zum Palettenwechsel
Machine-outil avec fonctionnalité pour l'échange de palettes et méthode pour l'échange de palettes

(30) Priority: 30.06.2004 JP 2004193338; 18.10.2004 JP 2004303038
(43) Date of publication of application: 04.01.2006
(73) Proprietor: FANUC LTD, Minamitsuru-gun, Yamanashi 401-0597 (JP)
(72) Inventor: Kojima, Kunio, Room 14-506, Minamitsuru-gun Yamanashi, 401-0511 (JP); Funakoshi, Akira, Room 14-406, Minamitsuru-gun Yamanashi, 401-0511 (JP)
(74) Representative: Billington, Lawrence Emlyn

(56) References cited:
- GB-A- 2 124 941
- PATENT ABSTRACTS OF JAPAN vol. 1999, no. 13, 30 November 1999 (1999-11-30) & JP 11 207561 A (DENSO CORP), 3 August 1999 (1999-08-03)

## Description

### BACKGROUND OF THE INVENTION

### 1. Field of the Invention

The present invention relates to a machine tool with a pallet change function and a pallet changing method, in which a pallet having workpieces fixed thereon is introduced into a machine tool, the workpieces on the pallet are machined, and the workpieces, along with the pallet, are then taken out of the machine tool.

### 2. Description of the Related Art

A pallet changer is a known technique for shortening the setup time for workpiece change in a machine tool. The pallet changer comprises a pallet on which workpieces are fixed and a drive system for conveying the pallet to and from the machine tool. When machining the workpieces on the pallet by the machine tool is finished, the pallet is carried out of the machine tool, and a pallet on which unmachined workpieces are fixed is carried into the machine tool, whereby the pallets are changed. By doing this, a time loss that is caused when the operation of the machine tool is stopped for the mounting or dismounting of the workpieces can be reduced.

A servomotor or a pneumatic or hydraulic system is used as the drive system for conveying the pallet to and from the machine tool. This system, however, is complicated in construction and expensive.

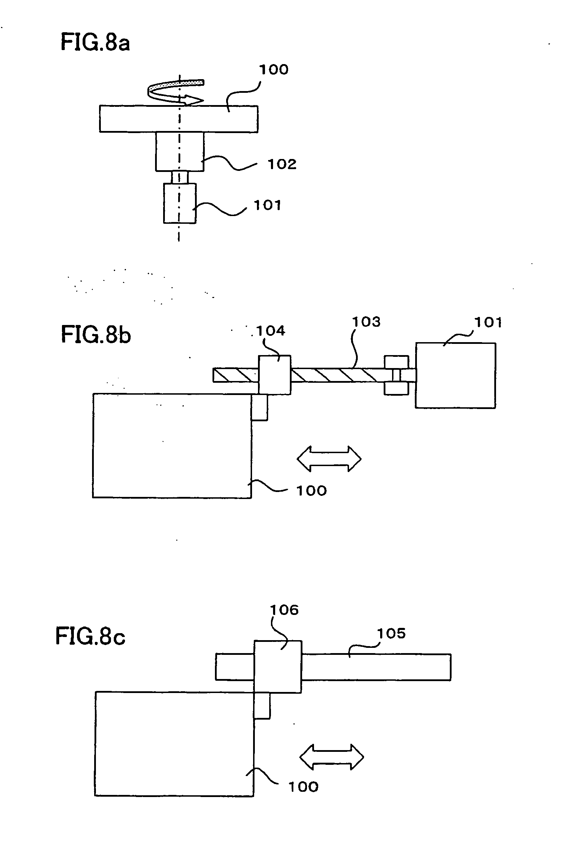

As shown in FIG. 8a, for example, a workpiece is fixed on a rotating pallet 100. A given region in a pallet rotation region is utilized as a machining region for the workpiece fixed on the pallet 100, and another given region as a region in which the workpiece is mounted on or dismounted from the pallet 100. A known pallet changer is constructed so that the pallet 100 is rotated by a servomotor 101 with the aid of a speed reducer 102.

A pallet changer shown in FIG. 8b is a prior art example in which the pallet 100 is conveyed by the servomotor 101. A rotary motion of the servomotor 101 is converted into a linear motion by a mechanism that is based on a ball screw 103 and a nut 104. The pallet 100 that is fixed to the nut 104 is conveyed and replaced with a new one.

In a pallet changer shown in FIG. 8c, an air cylinder 105 is used to convey the pallet 100.

These conventional pallet changers, which require use of the servomotor 101 or the air cylinder 105 as means for conveying the pallet 100, are complicated in construction and expensive.

In order to improve the operating efficiency and reduce the cost, on the other hand, workpiece machining has started to be partially or fully automated in many cases. Robots are used to automate mounting and dismounting of workpieces in many machine tools. In some known systems, moreover, robots are used to mount and dismount workpieces to and from pallets.

In a conventional or known parts supply system (see JP-A-11207561), one robot serves to convey pallets, place workpieces on the pallets, and convey the pallets on which the workpieces are placed.

A machine tool having a pallet change function uses pallet changers, such as the ones shown in FIGS. 8a to 8c. However, these pallet changers are expensive. In the machine tool with the pallet change function, on the other hand, workpieces must be fed onto or taken out of pallets, and a robot is used to mount and dismount the workpieces to and from the pallets. This robot grasps each workpiece and conveys it from one pallet to another. Therefore, it requires no substantial power and need not be large-sized.

In a conventional parts supply system, such as the one described in JP-A- 11207561, the robot is used to place the workpieces on the pallets and convey the pallets. In this system, the robot has a hand for workpieces and a hand for pallets, and these hands are alternatively used to grasp and lift up each workpiece or pallet. Since the pallets are supposed to be lift up as they are changed or piled up, they require use of a large-sized robot that can generate a great force.

### SUMMARY OF THE INVENTION

The present invention provides a machine tool with a pallet change function and a pallet changing method which are capable of conveying pallets by a workpiece handling robot without requiring any dedicated drive system.

A machine tool of the present invention comprises: a pallet for mounting at least one workpiece thereon; a pallet rest on which the pallet is placed; supporting means for supporting the pallet movably between a machining table and the pallet rest; and a robot for mounting/dismounting the workpiece on/from the pallet placed on the pallet rest, and for moving the pallet between the machining table and the pallet rest, said robot pushing or pulling the pallet.

The supporting means may comprise rollers provided at the pallet to roll on the machining table and the pallet rest. Alternatively, the supporting means may comprise rollers provided at the machining table and the pallet rest to roll on the pallet.

Further, the supporting means may comprise balls provided at the machining table and the pallet rest to rotate on the pallet.

The pallet may have a handle to be caught by the robot for moving the pallet.

The robot may be provided with an image capturing device of a visual sensor for detecting position and/or posture of a workpiece to be picked up.

A method of the present invention is for changing a pallet for mounting at least one workpiece thereon using a robot for mounting/dismounting the workpiece on/from the pallet in a machine tool having a machining table. The method comprises: providing a pallet rest on which the pallet is placed, and supporting means for supporting the pallet movably between the machining table and the pallet rest; and moving the pallet between the machining table and the pallet rest by the robot so as to change the pallet, which is pushed or pulled by the robot.

The method may further comprise detecting a position of a workpiece using a visual sensor in picking up the workpiece to be mounted on the pallet.

According to the present invention, since a workpiece handling robot for handling a workpiece to mount it to the pallet or dismounting it from the pallet is used as conveying means for conveying the pallet, the machine tool can be constructed at low cost without requiring any special drive means for a pallet changer.

### BRIEF DESCRIPTION OF THE DRAWINGS

FIG. 1a, 1b and 1c are views illustrating a table of a machine tool and a pallet changer base according to one embodiment of the present invention;
FIG. 2 is a view illustrating pallet conveying operation by a robot according to the embodiment;
FIG. 3 is a view showing an example of arrangement of a machine tool body, the pallet changer base, and a workpiece stage according to the embodiment;
FIG. 4 is a view illustrating the way a visual sensor is attached to the robot;
FIGS. 5a, 5b and 5c are views illustrating the way pallets according to the embodiment are carried into or out of the machine tool body;
FIGS. 6a, 6b and 6c are views illustrating a pallet changer base according to another embodiment of the invention;
FIGS. 7a, 7b and 7c are views illustrating the way pallets are conveyed by a robot according to the alternative embodiment; and
FIGS. 8a, 8b and 8c are views illustrating conventional pallet changers.

### DETAILED DESCRIPTION

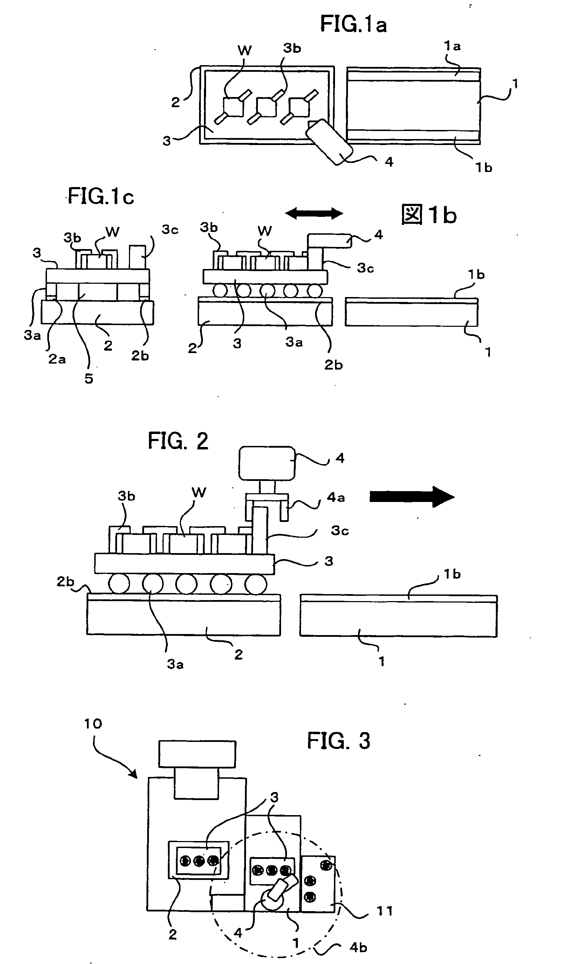

FIGS. 1a to 1c show a table and a pallet changer base of a machine tool according to an embodiment of the present invention. FIG 1a is a plan view, FIG. 1b is a front view, and FIG 1c is a side view. In these drawings, a pallet 3 is mounted on a table 2 of the machine tool.

Rails 1a and 1b are arranged individually on the opposite side end portions of a pallet changer base 1 as a pallet rest so as to extend toward the machine tool (table 2). Rails 2a and 2b are also arranged individually on the opposite side end portions of the table 2. A plurality of cylindrical rotatable rollers 3a are arranged at the opposite side end portions of the undersurface of the pallet 3 and set on the rails 1a, 1b, 2a and 2b. The pallet 3 is configured to move smoothly with less resistance as the rollers 3a rotate. The rails 1a, 1b, 2a and 2b and the rollers 3a constitute support means that supports the pallet 3 for movement.

A clamp mechanism 5 for fixing the pallet 3 on the table 2 is attached to the undersurface of the pallet 3 and the table 2 of the machine tool. Clamp means 3b for holding workpieces W are provided on the top surface of the pallet 3, and a handle 3c on one end of the pallet. A robot hand is hooked on the handle 3 c to move the pallet 3.

Numeral 4 denotes a robot, which carries the workpieces W into the pallet 3 or takes them out of the pallet 3. In the present embodiment, the robot 4 is caused to carry the pallet 3 onto or out of the table 2 of the machine tool. Conventionally, a technique has been used such that the workpieces W are grasped by the robot 4 and mounted on or dismounted from the pallet 3. In a conventional machine tool system, a pallet changer shown in FIGS. 8a, 8b and 8c is used besides the robot 4 to convey the pallet 3.

According to the present invention, the workpiece handling robot 4 is used as conveying means for the pallet 3, and any dedicated pallet changer need not be used.

As shown in FIG. 2, one end of a hand 4a of the robot 4 that grasps each workpiece W is caused to engage the handle 3c on the pallet 3, and the pallet 3 is pulled or pushed out. By doing this, the pallet 3 is moved between the table 2 and the pallet changer base 1. The rollers 3a on the underside of the pallet 3 roll on the rails 1a, 1b, 2a and 2b as they move. Thus, the robot 4 may be the conventional small-sized handling robot 4 for handling each workpiece W, which can convey the pallet 3 without requiring generation of any substantial force.

FIG. 3 is a plan view showing arrangement relations between a machine tool body 10, the pallet changer base 1, the robot 4, and a workpiece stage 11 according to the present embodiment.

In FIG 3, a region 4b surrounded by dashed line represents a workable region for the robot 4. The robot 4 grasps unmachined workpieces W on the workpiece stage 11 and carries them into the pallet 3 on the pallet changer base 1. Thereafter, the workpieces W are fixed on the pallet 3 by the clamp means 3b. Further, machined workpieces W are grasped and taken out of the pallet 3 on the pallet changer base 1 and placed on the workpiece stage 11. Furthermore, the robot 4 pulls out the pallet 3 on the table 2 of the machine tool body 10 onto the pallet changer base 1 and carries the pallet 3 on the base 1 onto the table 2.

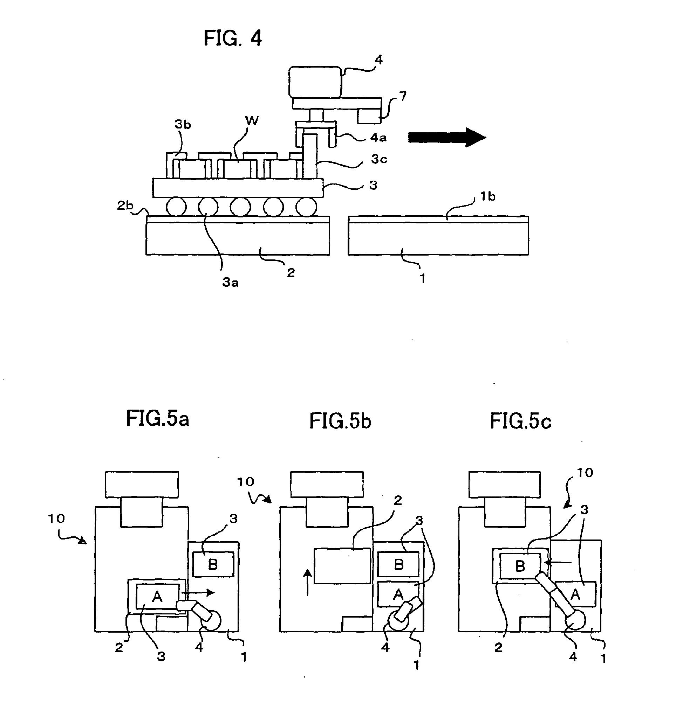

Alternatively, the robot 4 may be provided with a visual sensor for the replacement of the workpieces. FIG. 4 is a view showing an example in which an image capturing device 7 of the visual sensor is attached to an arm end of the robot 4. The image capturing device 7 of the visual sensor captures an image of each workpiece W on the workpiece stage 11. Thereupon, the position and posture of the workpiece W are detected by the visual sensor, and the robot 4 is moved to the detected position to grasp and pick up the workpiece. If the workpiece W fails to be set precisely in place on the workpiece stage 11, the visual sensor can be utilized conveniently.

FIGS. 5a, 5b and 5c are views illustrating operation for delivering the pallet 3 to or from the table 2.

When the machine tool body 10 finishes machining the workpiece W fixed on the pallet 3 (machining the workpiece W on a pallet 3-A is supposed to have been finished in FIGS. 5a to 5c), the table 2 is situated in an exit position for the pallet 3-A. The clamp mechanism 5 is unclamped so that one end of the hand 4a of the robot 4 is caused to engage the handle 3c of the pallet 3, as shown in FIG. 2. Thus, the robot 4 is driven to pull out the pallet 3 toward the pallet changer base 1. When this is done, the pallet 3-A is delivered onto the base 1, as shown in FIG 5b.

Then, the table 2 is moved and situated in the position of the pallet changer base 1 on which a pallet 3-B is placed. The hand 4a of the robot 4 is caused to engage the handle 3c of the pallet 3-B, and the robot 4 is driven to move and carry the pallet 3-B on the base 1 onto the table 2 (see FIG 5c). The pallet 3-B is clamped by the clamp mechanism 5, and the workpiece W fixed on the pallet 3-B is machined by the machine tool body 10.

While the workpiece W on the pallet 3-B is being machined, the machined workpiece W on the pallet 3-A is unclamped, and the hand 4a of the robot 4 grasps and carries out the workpiece W onto the workpiece stage 11. Thereafter, the robot 4 carries in the unmachined workpiece W on the workpiece stage 11 onto pallet 3-A and set it thereon. Thereafter, the pallets 3-A and 3-B are alternately delivered onto the table 2, whereupon the workpiece W is machined by the machine tool body 10, and machined and unmachined workpieces are alternatively set on the pallet 3.

In the embodiment described above, the rollers 3a are provided on the side of the pallet 3. Alternatively, however, the rollers may be provided on the side of the pallet changer base 1 and the table 2, and not on the pallet side. In this embodiment, moreover, the base and the table 2 are provided with the rails 1a, 1b, 2a and 2b. However, these rails need not always be provided, and the rollers may be replaced with spheres.

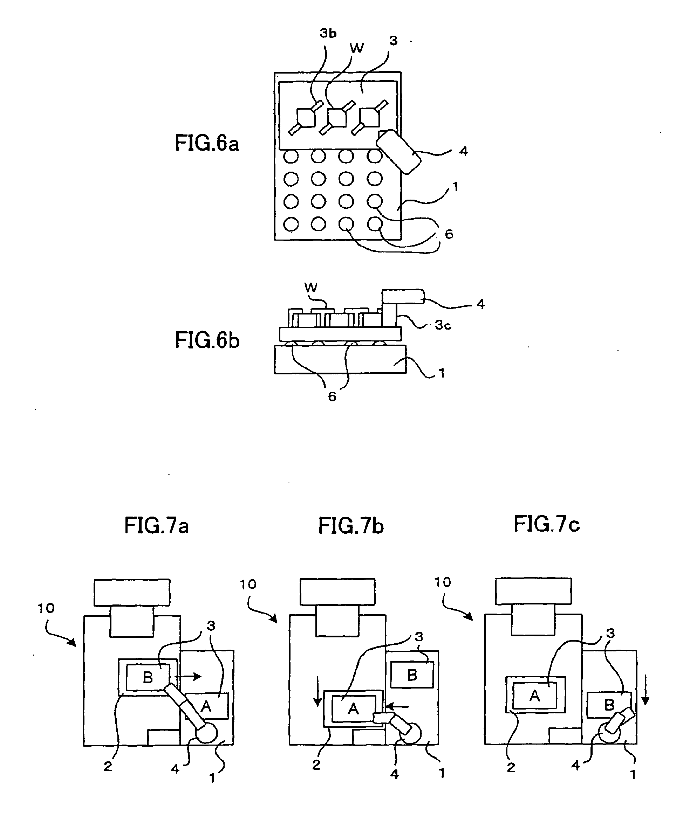

FIGS. 6a and 6b are views illustrating another embodiment that uses spheres in place of the rollers. FIG. 6a is a plan view showing a pallet changer base and a pallet, and FIG. 6b is a front view. Like numerals are used to designate elements equivalent to those of the embodiment shown in FIGS. 1a to 1c.

A plurality of spheres 6 are rotatably arranged on the top surface of a pallet changer base 1, and a pallet 3 is supported by the spheres 6. Likewise, a plurality of spheres 6 are arranged on the top surface of a table 2 of a machine tool body (not shown), and support the pallet 3. The table 2 need not always be provided with the spheres 6, and rollers may be arranged so as to be rotatable in the direction to take the pallet in and out. Since the rotation direction of the spheres 6 is not restricted, the pallet 3 can move both longitudinally and transversely over the pallet changer base 1. If a working region for a robot 4 is narrow, therefore, the pallet 3 itself can be pulled toward the robot as workpieces W are mounted on or dismounted from the pallet.

FIGS. 7a to 7c are views illustrating operation for delivering the pallet 3 according to this alternative embodiment to or from the machine tool body 10.

FIG. 7a is a view showing a state in which a pallet 3-B is being conveyed from the table 2 to the pallet changer base 1 after the workpieces W on the pallet 3-B are machined. The table 2 is situated in an exit position for the pallet 3 on the pallet changer base 1, and a hand 4a of the robot 4 is caused to engage a handle 3c of the pallet 3-B. The robot 4 is driven to pull and take out the pallet 3-B onto the pallet changer base 1. Then, the table 2 is situated in a.pallet inlet position, and a pallet 3-A on which unmachined workpieces W are set is conveyed from the base 1 to the table 2 by the robot 4 (see FIG. 7b).

Thereafter, the table 2 is moved to a machining position, and the robot 4 moves the pallet 3-B to a workpiece mounting and dismounting position (corresponding to the pallet inlet position), as shown in FIG. 7c. Since the rotatable spheres 6 are arranged on the top surface of the pallet changer base 1, in this case, the pallet 3-B can also move at right angles to the direction of conveyance from the table 2, so that the robot 4 requires no substantial power.

In this state of FIG. 7c, the machined workpieces W on the pallet 3-B are taken out onto the workpiece stage 11 by the robot 4, and the unmachined workpieces W on the workpiece stage 11 are mounted on the pallet 3-B. Thus, the pallet 3 is pulled toward the robot as workpieces W are mounted on or dismounted from the pallet 3, so that the robot 4 can satisfactorily perform its operation even in a narrow working region.

## Claims

1. A machine tool having a machining table (2), comprising:
a pallet (3) for mounting at least one workpiece (w) thereon;
a pallet rest (1) on which said pallet is placed;
supporting means (1A,1B) for supporting said pallet movably between the machining table and said pallet rest; and
a robot (4) for mounting/dismounting the workpiece on/from said pallet placed on said pallet rest, and for moving said pallet between the machining table and said pallet rest, said robot pushing or pulling the pallet.

2. A machine tool according to claim 1, wherein said supporting means comprises rollers provided at said pallet to roll on the machining table and said pallet rest.

3. A machine tool according to claim 1, wherein said supporting means comprises rollers provided at the machining table and said pallet rest to roll on said pallet.

4. A machine tool according to claim 1, wherein said supporting means comprises balls provided at the machining table and said pallet rest to rotate on said pallet.

5. A machine tool according to claim 1, wherein said pallet has a handle to be caught by said robot for moving said pallet.

6. A machine tool according to claim 1, wherein said robot is provided with an image capturing device of a visual sensor.

7. A method of changing a pallet for mounting at least one workpiece thereon using a robot (4) for mounting/dismounting the workpiece (w) on/from the pallet (1) in a machine tool having a machining table (2), said method comprising:
providing a pallet rest (1) on which said pallet is placed, and supporting means (1a,1b) for supporting said pallet movably between the machining table and said pallet rest; and
moving said pallet between the machining table and said pallet rest by said robot so as to change said pallet which is pushed or pulled by the robot.

8. A method of changing a pallet according to claim 7, further comprising detecting a position of a workpiece using a visual sensor in picking up the workpiece to be mounted on said pallet.

## Patentansprüche

1. Werkzeugmaschine mit einem Bearbeitungstisch (2), umfassend:
eine Palette (3), auf der man mindestens ein Werkstück (W) befestigt;
eine Palettenauflage (1), auf der die Palette untergebracht ist;
Haltevorrichtungen (1A, 1B) zum beweglichen Halten der Palette zwischen dem Bearbeitungstisch und der Palettenauflage; und
einen Roboter (4) zum Befestigen/Abnehmen des Werkstücks auf/von der Palette, die auf der Palettenauflage untergebracht ist, und zum Bewegen der Palette zwischen dem Bearbeitungstisch und der Palettenauflage, wobei der Roboter die Palette schiebt oder zieht.

2. Werkzeugmaschine nach Anspruch 1, wobei die Haltevorrichtung an der Palette befindliche Rollen umfasst, die auf dem Bearbeitungstisch und auf der Palettenauflage rollen.

3. Werkzeugmaschine nach Anspruch 1, wobei die Haltevorrichtung auf dem Bearbeitungstisch und auf der Palettenauflage befindliche Rollen umfasst, die auf der Palette rollen.

4. Werkzeugmaschine nach Anspruch 1, wobei die Haltevorrichtung am Bearbeitungstisch und an der Palettenauflage befindliche Kugeln umfasst, die sich auf der Palette drehen.

5. Werkzeugmaschine nach Anspruch 1, wobei die Palette einen Handgriff hat, der vom Roboter zum Bewegen der Palette festgehalten werden soll.

6. Werkzeugmaschine nach Anspruch 1, wobei der Roboter eine Bildaufnahmevorrichtung eines Optiksensors hat.

7. Verfahren zum Wechseln einer Palette zum Befestigen von mindestens einem Werkstück darauf mit einem Roboter (4) zum Befestigen/Abnehmen des Werkstücks (W) auf/von der Palette (1) in einer Werkzeugmaschine mit einem Bearbeitungstisch (2), wobei das Verfahren umfasst:
Bereitstellen einer Palettenauflage (1), auf der die Palette untergebracht ist, und einer Haltevorrichtung (1a, 1 b) zum beweglichen Halten der Palette zwischen dem Bearbeitungstisch und der Palettenauflage; und
Bewegen der Palette zwischen dem Bearbeitungstisch und der Palettenauflage durch den Roboter, so dass die Palette gewechselt wird, die von dem Roboter geschoben oder gezogen wird.

8. Verfahren zum Wechseln einer Palette nach Anspruch 7, zudem umfassend das Erfassen einer Position eines Werkstücks mit einem Optiksensor beim Aufnehmen des auf der Palette zu befestigenden Werkstücks.

## Revendications

1. Machine-outil comportant une table d'usinage (2), comprenant :
une palette (3) pour monter au moins une pièce (W) sur celle-ci ;
un appui de palette (1) sur lequel ladite palette est placée ;
des moyens de support (1A, 1B) pour supporter ladite palette en déplacement entre la table d'usinage et ledit appui de palette ; et
un robot (4) pour monter/démonter la pièce sur/de ladite palette placée sur ledit appui de palette, et pour déplacer ladite palette entre la table d'usinage et ledit appui de palette, ledit robot poussant ou tirant la palette.

2. Machine-outil selon la revendication 1, où ledit moyen de support comprend des rouleaux prévus à ladite palette pour rouler sur la table d'usinage et ledit appui de palette.

3. Machine-outil selon la revendication 1, où ledit moyen de support comprend des rouleaux prévus à la table d'usinage et audit appui de palette pour rouler sur ladite palette.

4. Machine-outil selon la revendication 1, où ledit moyen de support comprend des billes prévues à la table d'usinage et audit appui de palette pour tourner sur ladite palette.

5. Machine-outil selon la revendication 1, où ladite palette possède une poignée à saisir par ledit robot pour déplacer ladite palette.

6. Machine-outil selon la revendication 1, où ledit robot présente un dispositif de prise d'image d'un capteur visuel.

7. Procédé d'échange d'une palette pour monter au moins une pièce sur celle-ci en utilisant un robot (4) pour monter/démonter la pièce (W) sur/de la palette (1) dans une machine-outil comportant une table d'usinage (2), ledit procédé comprenant les étapes consistant à :
réaliser un appui de palette (1) sur lequel ladite palette est placée, et des moyens de support (1a,1b) pour supporter ladite palette en déplacement entre la table d'usinage et ledit appui de palette ; et
déplacer ladite palette entre la table d'usinage et ledit appui de palette par ledit robot de manière à changer ladite palette, qui est poussée ou tirée par le robot.

8. Procédé d'échange d'une palette selon la revendication 7, comprenant en outre la détection d'une position d'une pièce en utilisant un capteur visuel lors de la saisie de la pièce à monter sur ladite palette.
